# EUROPEAN PATENT APPLICATION

(11) **EP 2 605 618 A1**
(43) Date of publication of application: **19.06.2013**
(21) Application number: 12155342.4
(22) Date of filing: 14.02.2012
(51) Int. Cl.: H05B 33/08

(54) **Light adjustment device and light system including the same**

(30) Priority: 24.11.2011 TW 100143178
(71) Applicant: Lextar Electronics Corp., 30075 Hsinchu (TW)
(72) Inventor: Chen, Chun-Kuang, 111 Taipei City (TW); Chen, Yuan-Ching, 830 Kaohsiung City (TW); Chen, Tung-Yu, 709 Tainan City (TW)
(74) Representative: Becker Kurig Straus

(57) **Abstract**

A light system includes a lamp, a user operation interface, a control unit and a communication unit. The user operation interface is adapted to be used by a user to select a brightness value or a color temperature value, wherein the user operation interface includes a display unit and a touch control unit. The display unit is used to output a graphical interface. The touch control unit is used to detect a touch action upon the graphical interface of the display unit. The control unit is electrically connected to the user operation interface for receiving and processing a selection of the brightness value or the color temperature value from the user operation interface. The communication unit is electrically connected to the control unit for transmitting the selection of the brightness value or the color temperature value to the lamp via a wireless protocol.

## Description

### BACKGROUND

### Field of Invention

The present invention relates to a light system and a light adjustment device thereof. More particularly, the present invention relates to an LED (Light-Emitting Diode) light system and a light adjustment device thereof.

### Description of Related Art

A light emitting diode is a semiconductor device, which emits light when a positive electrical bias is applied. Due to various compositions of the LED, the LED can emit ultraviolet light, visible light, infrared light or light of other wave lengths.

Compared with conventional light sources, the LED presents many advantages including lower energy consumption, longer lifetime, improved robustness, smaller size, and faster switching. Therefore, the LED is regarded as a new light source in the 21 st century, and can replace an incandescent lamp and a fluorescent lamp to serve as a major light source.

In addition, the LED lamp is equipped with wide ranges adjustment of brightness and color temperature. If the LED lamp is controlled by a conventional switch, the advantages of the LED lamp cannot be fully demonstrated. For the forgoing reasons, a friendly and well-designed user operation interface is needed.

### SUMMARY

It is therefore an objective of the present invention to provide a light adjustment device and a light system including the same.

In accordance with the foregoing and other objectives of the present invention, a light adjustment device includes a user operation interface, a control unit and a communication unit. The user operation interface is adapted to be used by a user to select a brightness value or color temperature value, wherein the user operation interface includes a display unit and a touch control unit. The display unit is used to output a graphical interface. The touch control unit is used to detect a touch action upon the graphical interface of the display unit. The control unit is electrically connected to the user operation interface for receiving and processing a selection of the brightness value or the color temperature value from the user operation interface. The communication unit is electrically connected to the control unit for transmitting the selection of the brightness value or the color temperature value to a target lamp.

According to another embodiment disclosed herein, the graphical interface includes an arc-shaped touch control section and a touch control inhibiting section, wherein the arc-shaped touch control section and the touch control inhibiting section collectively form a close-loop ring, and the arc-shaped touch control section is capable of displaying a plurality of color gradients of the brightness value or the color temperature value.

According to another embodiment disclosed herein, the graphical interface further includes a selection value display section disposed within the close-loop ring.

According to another embodiment disclosed herein, the arc-shaped touch control section further includes a plurality of scales disposed on an edge thereof.

According to another embodiment disclosed herein, the control unit is capable of displaying a pointer corresponding to where the user is in contact with the arc-shaped touch control section.

According to another embodiment disclosed herein, the arc-shaped touch control section includes an initial end and a terminal end, and the touch control inhibiting section is disposed between the initial end and the terminal end.

According to another embodiment disclosed herein, the graphical interface includes a long-strip touch control section, which is capable of displaying a plurality of color gradients of the brightness value or the color temperature value.

According to another embodiment disclosed herein, the graphical interface further includes a selection value display section disposed adjacent to the long-strip touch control section.

According to another embodiment disclosed herein, the long-strip touch control section comprises a plurality of scales disposed on an edge thereof.

According to another embodiment disclosed herein, the control unit is capable of displaying a pointer corresponding to where the user is in contact with the long-strip touch control section.

In accordance with the foregoing and other objectives of the present invention, a light system includes a lamp, a user operation interface, a control unit and a communication unit. The user operation interface is adapted to be used by a user to select a brightness value or color temperature value, wherein the user operation interface includes a display unit and a touch control unit. The display unit is used to output a graphical interface. The touch control unit is used to detect a touch action upon the graphical interface of the display unit. The control unit is electrically connected to the user operation interface for receiving and processing a selection of the brightness value or the color temperature value from the user operation interface. The communication unit is electrically connected to the control unit for transmitting the selection of the brightness value or the color temperature value to the lamp via a wireless protocol.

According to another embodiment disclosed herein, the graphical interface includes an arc-shaped touch control section and a touch control inhibiting section, wherein the arc-shaped touch control section and the touch control inhibiting section collectively form a close-loop ring, and the arc-shaped touch control section is capable of displaying a plurality of color gradients of the brightness value or the color temperature value.

According to another embodiment disclosed herein, the graphical interface further includes a selection value display section disposed within the close-loop ring.

According to another embodiment disclosed herein, the arc-shaped touch control section further includes a plurality of scales disposed on an edge thereof.

According to another embodiment disclosed herein, the control unit is capable of displaying a pointer corresponding to where the user is in contact with the arc-shaped touch control section.

According to another embodiment disclosed herein, the arc-shaped touch control section includes an initial end and a terminal end, and the touch control inhibiting section is disposed between the initial end and the terminal end.

According to another embodiment disclosed herein, the graphical interface includes a long-strip touch control section, which is capable of displaying a plurality of color gradients of the brightness value or the color temperature value.

According to another embodiment disclosed herein, the graphical interface further includes a selection value display section disposed adjacent to the long-strip touch control section.

According to another embodiment disclosed herein, the long-strip touch control section comprises a plurality of scales disposed on an edge thereof.

According to another embodiment disclosed herein, the control unit is capable of displaying a pointer corresponding to where the user is in contact with the long-strip touch control section.

According to another embodiment disclosed herein, the lamp is an LED (Light-Emitting Diode) lamp.

According to another embodiment disclosed herein, the wireless protocol includes an infared, micromave, RF, Zigbee, Wimax, 2G, 3G, 4G, bluetooth or WIFI protocol.

Thus, the user operation interface of the light adjustment device disclosed herein can be applied on various types of portable electronic devices for users to apply a touch action upon the graphical interface to select a desired brightness value or color temperature value visually and directly. In addition, the initial end and the terminal end of the arc-shaped touch control section or of the long-strip touch control section are spaced from each other, thereby preventing the selection mistakes of a conventional circular touch control section. When a user contacts a boundary between the initial end and the terminal end of the conventional circular touch control section, a selection of 100% brightness may be incorrectly detected as 0% brightness, such that the user may suffer from uncomfortableness or inconvenience of the wrong detections.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 illustrates a functional diagram of a light system according to an embodiment of this invention;
Fig. 2 illustrates a user operation interface of a light adjustment device according to a first embodiment of this invention;
Fig. 3 illustrates a user operation interface of a light adjustment device according to a second embodiment of this invention;
Fig. 4 illustrates a user operation interface of a light adjustment device according to a third embodiment of this invention;
Fig. 5 illustrates a user operation interface of a light adjustment device according to a fourth embodiment of this invention; and
Fig. 6 illustrates a user operation interface of a light adjustment device according to a fifth embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

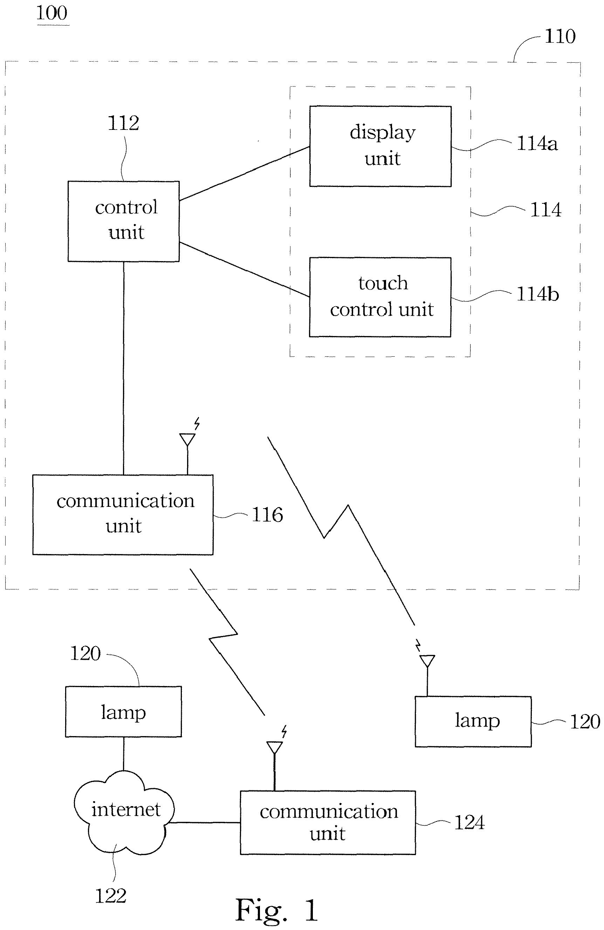

Fig. 1 illustrates a functional diagram of a light system according to an embodiment of this invention. The light system 100 basically includes a light adjustment device 110 and a lamp 120. The light adjustment device 110 includes a control unit 112, a display unit 114a, a touch control unit 114b and a communication unit 116. A light adjustment device 110 equipped with these units can be a tablet computer, a smart phone, an I-phone or other potable electronic devices. The display unit 114a and touch control unit 114b collectively form a user operation interface 114. The display unit 114a is driven by the control unit 112 to output a graphical interface, which is capable of displaying a plurality of color gradients of the brightness value or the color temperature value. Therefore, a user can directly select a desired brightness value or color temperature from the color gradients of the brightness value or the color temperature value based upon what she or he sees on the graphical interface. The touch control unit 114b is used to detect a touch action upon the graphical interface of the display unit 114a and to transmit the detection result to the control unit 112. The control unit 112 is electrically connected to the user operation interface 114, and is used to receive and process a selection of the brightness value or the color temperature value from the user operation interface. The communication unit 116 is electrically connected to the control unit 112, and is used to transmit the selection of the brightness value or the color temperature value to a target lamp 120 via a wireless protocol so as to control its brightness value or color temperature. In this embodiment, the lamp 120 can be LED lamp or another type of lamp. The lamp 120 can be equipped with an antenna or connected to a communication unit 124 equipped with an antenna via an Internet 122, such that the light adjustment device 110 can control the lamp 120 via a wireless protocol. Applicable wireless protocols include, but are not limited to, infared, micromave, RF, Zigbee, Wimax, 2G, 3G, 4G, bluetooth or WIFI protocols.

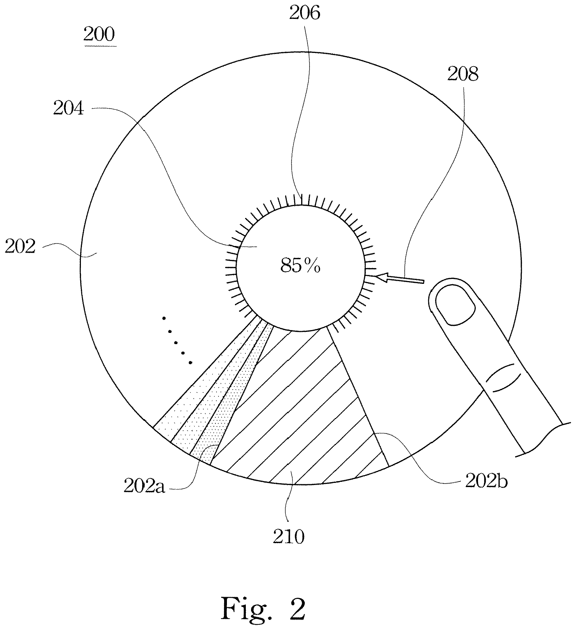

Fig. 2 illustrates a user operation interface 200 of a light adjustment device according to a first embodiment of this invention. The user operation interface 200 includes an arc-shaped touch control section 202, which selectively displays a plurality of color gradients of the brightness value or the color temperature value. Taking the brightness value as an example, the arc-shaped touch control section 202 may display a darkest color at its initial end 202a, and progressively display brighter colors from the initial end 202a to the terminal end 202b, and display the brightest color at the terminal end 202b. A touch control inhibiting section 210 is located between the initial end 202a and the terminal end 202b of the arc-shaped touch control section 202, that is, there are no color gradients of the brightness value or the color temperature value and the brightness value or the color temperature value cannot be selected within this section. The touch control inhibiting section 210 can prevent the selection mistakes of a conventional circular touch control section. When a user contacts a boundary between the initial end and the terminal end of the conventional circular touch control section, a selection of 100% brightness may be incorrectly detected as 0% brightness, such that the user may suffer from uncomfortableness or inconvenience of the wrong detections. In this embodiment, the arc-shaped touch control section 202 and the touch control inhibiting section 210 collectively form a close-loop ring.

The graphical interface may also include a selection value display section 204 within the close-loop ring of the arc-shaped touch control section 202 and the touch control inhibiting section 210. When the user contacts the arc-shaped touch control section 202, for example, by using a finger to touch, the selection value display section 204 displays the currently selected brightness value or color temperature value, such as a brightness value percentage in Fig. 2 or a color temperature value. The selection value display section 204 may also display the currently selected color gradients of the brightness value or the color temperature value as a background for the currently selected brightness value or color temperature value.

The graphical interface may also include a plurality of scales located at an edge of the arc-shaped touch control section 202. In this embodiment, the scales 206 are displayed at an inner edge of the arc-shaped touch control section 202. In an alternate embodiment, the scales 206 are displayed at an outer edge of the arc-shaped touch control section 202 (not illustrated in the drawings).

The graphical interface may be driven by the control unit to display a pointer indicating the currently selected brightness value or color temperature value, and a pointer 208 is displayed corresponding to where the user is in contact with the graphical interface so as to indicate the currently selected brightness value or color temperature value of the scales 206.

The above-mentioned selection value display section 204, scales 206 and pointer 208 may not be essential designs of the graphical interface, but is beneficial for conveniently using the user operation interface as well as precisely controlling the brightness value or color temperature value.

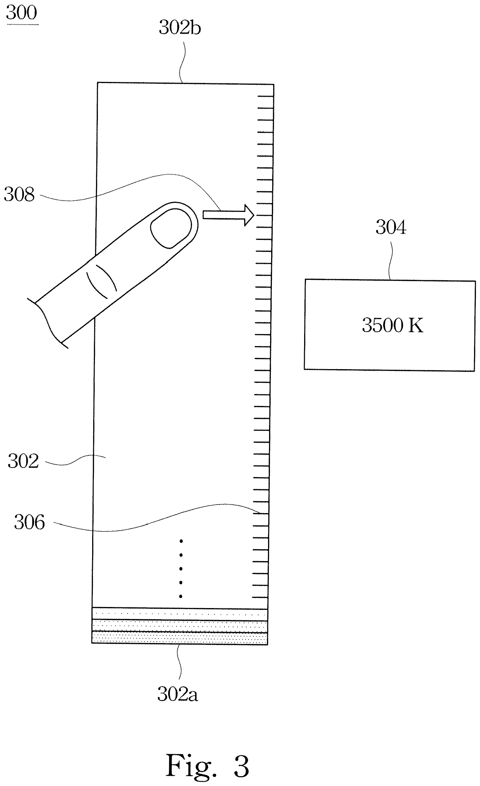

Fig. 3 illustrates a user operation interface of a light adjustment device according to a second embodiment of this invention. The user operation interface 300 includes a long-strip touch control section 302, which selectively displays a plurality of color gradients of the brightness value or the color temperature value. Taking the color temperature value as an example, the long-strip touch control section 302 may display a color of a lowest color temperature at its initial end 302a, and progressively display colors of higher color temperatures from the initial end 302a to the terminal end 302b, and display a color of a highest color temperature at the terminal end 302b. The initial end 302a and the terminal end 302b of the long-strip touch control section 302 are spaced from each other, thereby preventing the selection mistakes of a conventional circular touch control section. When a user contacts a boundary between the initial end and the terminal end of the conventional circular touch control section, a selection of 100% brightness may be wrongly detected as 0% brightness such that the user may suffer from uncomfortableness or inconvenience of the wrong detections.

The graphical interface may also include a selection value display section 304 adjacent to the long-strip touch control section 302. When the user contacts the long-strip touch control section 302, for example, by using a finger to touch, the selection value display section 304 displays the currently selected brightness value or color temperature value, such as a brightness value percentage or a color temperature value in Fig. 3. The selection value display section 304 may also display the currently selected color gradients of the brightness value or the color temperature value as a background for the currently selected brightness value or color temperature value.

The graphical interface may also include a plurality of scales located at an edge of the long-strip touch control section 302. In this embodiment, the scales 306 are displayed at a right edge of the long-strip touch control section 302. In an alternate embodiment, the scales 206 may be displayed at a left edge of the long-strip touch control section 302 (not illustrated in the drawings).

The graphical interface may be driven by the control unit to display a pointer indicating the currently selected brightness value or color temperature value, a pointer 308 is displayed corresponding to where the user is in contact with the graphical interface so as to indicate the currently selected brightness value or color temperature value of the scales 306.

The above-mentioned selection value display section 304, scales 306 and pointer 308 may not be essential designs of the graphical interface, but is beneficial for conveniently using the user operation interface as well as precisely controlling the brightness value or color temperature value.

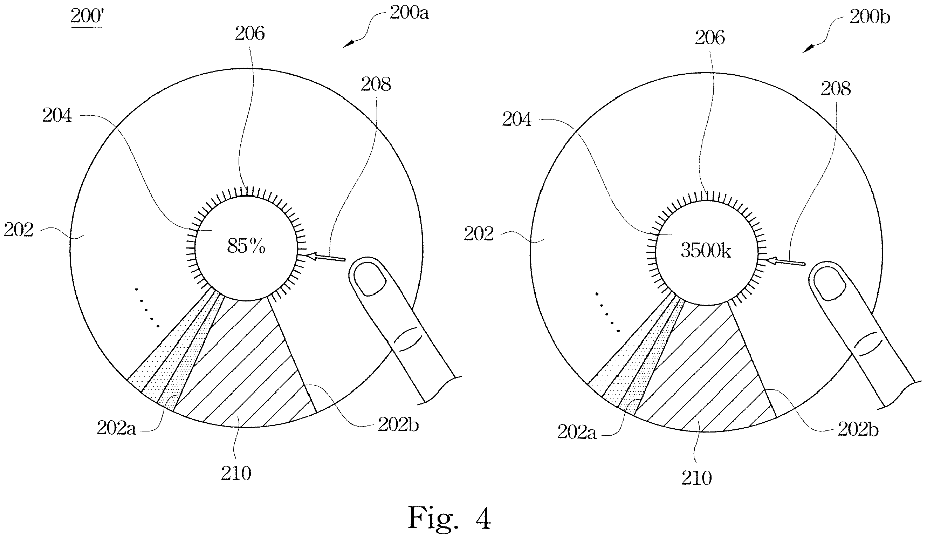

Fig. 4 illustrates a user operation interface of a light adjustment device according to a third embodiment of this invention. The user operation interface 200' includes an operation interface 200a and an operation interface 200b for a user to simtaneously adjust the brightness value and color temperature value. The operation interface 200a is used to adjust the brightness value, and the operation interface 200b is used to adjust the color temperature value. Each operation interface (200a or 200b) includes an arc-shaped touch control section 202, which displays a plurality of color gradients of the brightness value or the color temperature value. Taking the operation interface 200a as an example, the arc-shaped touch control section 202 may display a darkest color at its initial end 202a, and progressively display brighter colors from the initial end 202a to the terminal end 202b, and display the brightest color at the terminal end 202b. Taking the operation interface 200b as an example, the arc-shaped touch control section 202 may display a color of a lowest color temperature at its initial end 202a, and progressively display colors of higher color temperatures from the initial end 202a to the terminal end 202b, and display a color of a highest color temperature at the terminal end 202b. A touch control inhibiting section 210 is located between the initial end 202a and the terminal end 202b of the arc-shaped touch control section 202, that is, there are no color gradients of the brightness value or the color temperature value and the brightness value or the color temperature value cannot be selected in this section. The touch control inhibiting section 210 prevents the selection mistakes of a conventional circular touch control section. When a user contacts a boundary between the initial end and the terminal end of the conventional circular touch control section, a selection of 100% brightness may be incorrectly detected as 0% brightness, such that the user may suffer from uncomfortableness or inconvenience of the wrong detections. In this embodiment, the arc-shaped touch control section 202 and the touch control inhibiting section 210 collectively form a close-loop ring.

The graphical interface may also include a selection value display section 204 within the close-loop ring of the arc-shaped touch control section 202 and the touch control inhibiting section 210. When the user contacts the arc-shaped touch control section 202, for example, by using a finger to touch, the selection value display section 204 displays the currently selected brightness value or color temperature value, such as brightness value percentage or color temperature value in the drawings. The selection value display section 204 may also display the currently selected color gradients of the brightness value or the color temperature value as a background for the currently selected brightness value or color temperature value.

The graphical interface may also include a plurality of scales located at an edge of the arc-shaped touch control section 202. In this embodiment, the scales 206 are displayed at an inner edge of the arc-shaped touch control section 202. In an alternate embodiment, the scales 206 are displayed at an outer edge of the arc-shaped touch control section 202 (not illustrated in the drawings).

The graphical interface may be driven by the control unit to display a pointer indicating the currently selected brightness value or color temperature value, a pointer 208 is displayed corresponding to where the user is in contact with the graphical interface so as to indicate the currently selected brightness value or color temperature value of the scales 206.

The above-mentioned selection value display section 204, scales 206 and pointer 208 may not be essential designs of the graphical interface, but is beneficial for conveniently using the user operation interface as well as precisely controlling the brightness value or color temperature value.

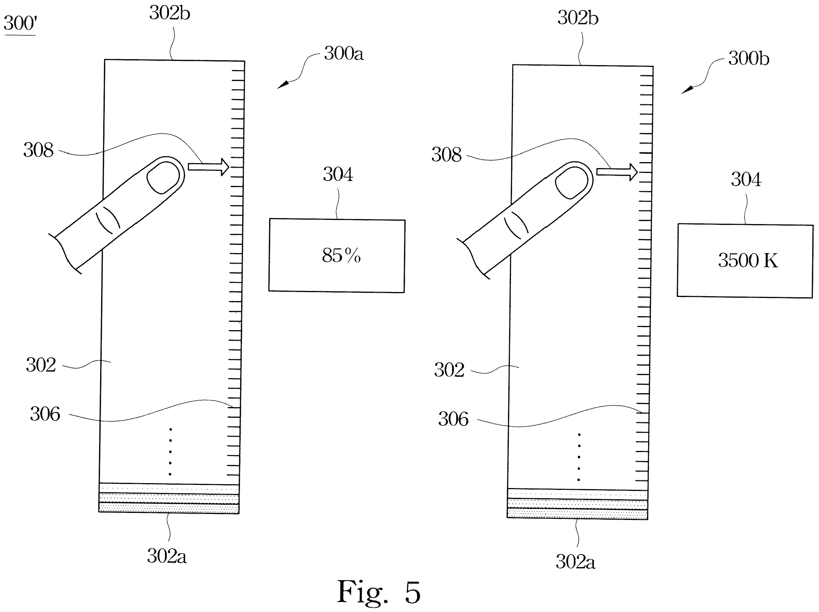

Fig. 5 illustrates a user operation interface 300' of a light adjustment device according to a fourth embodiment of this invention. The user operation interface 300' includes an operation interface 300a and an operation interface 300b for a user to simtaneously adjust the brightness value and color temperature value. The operation interface 300a is used to adjust the brightness value, and the operation interface 300b is used to adjust the color temperature value. Each operation interface (300a or 300b) includes a long-strip touch control section 302, which displays a plurality of color gradients of the brightness value or the color temperature value. Taking the operation interface 300a as an example, the long-strip touch control section 302 may display a darkest color at its initial end 302a, and progressively display brighter colors from the initial end 202a to the terminal end 302b, and display the brightest color at the terminal end 302b. Taking the operation interface 300b as an example, the long-strip touch control section 302 may display a color of a lowest color temperature at its initial end 302a, and progressively display colors of higher color temperatures from the initial end 202a to the terminal end 302b, and display a color of a highest color temperature at the terminal end 302b. The initial end 302a and the terminal end 302b of the long-strip touch control section 302 are spaced from each other, thereby preventing the selection mistakes of a conventional circular touch control section. When a user contacts a boundary between the initial end and the terminal end of the conventional circular touch control section, a selection of 100% brightness may be wrongly detected as 0% brightness such that the user may suffer from uncomfortableness or inconvenience of the wrong detections.

The graphical interface may also include a selection value display section 304 adjacent to the long-strip touch control section 302. When the user contacts the long-strip touch control section 302, e.g., by using a finger to touch, the selection value display section 304 displays the currently selected brightness value or color temperature value, e.g., brightness value percentage or color temperature value in Fig. 3. The selection value display section 304 may also display the currently selected color gradients of the brightness value or the color temperature value as a background for the currently selected brightness value or color temperature value.

The graphical interface may also include a plurality of scales located at an edge of the long-strip touch control section 302. In this embodiment, the scales 306 are displayed at a right edge of the long-strip touch control section 302. In an alternate embodiment, the scales 206 may be displayed at a left edge of the long-strip touch control section 302 (not illustrated in the drawings).

The graphical interface may display be driven by the control unit to a pointer indicating the currently selected brightness value or color temperature value, a pointer 308 is displayed corresponding to where the user is in contact with the graphical interface so as to indicating the currently selected brightness value or color temperature value of the scales 306.

The above-mentioned selection value display section 304, scales 306 and pointer 308 may not be essential designs of the graphical interface, but is beneficial for conveniently using the user operation interface as well as precisely controlling the brightness value or color temperature value.

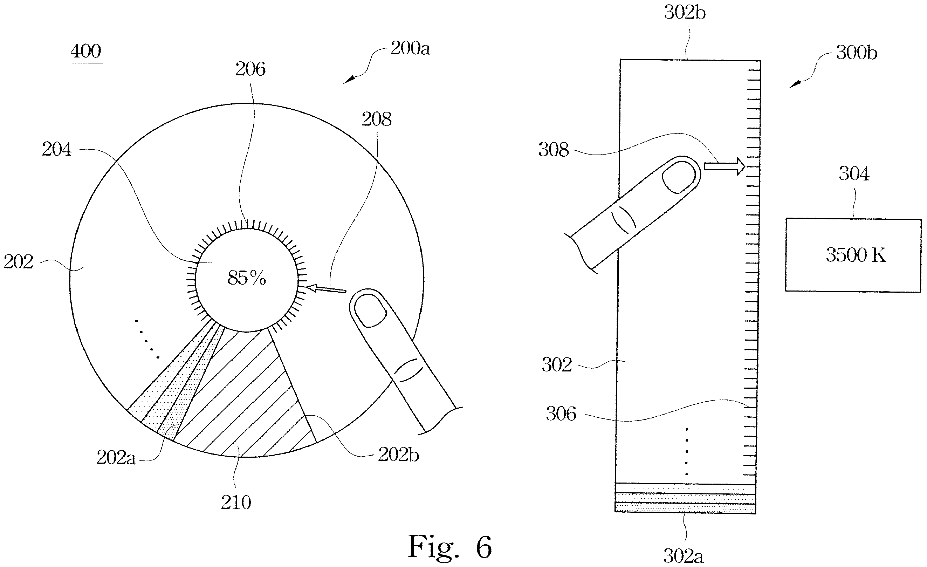

Fig. 6 illustrates a user operation interface 400 of a light adjustment device according to a fifth embodiment of this invention. The user operation interface 400 includes an operation interface 200a and an operation interface 300b (as illustrated in Fig. 6) or an operation interface 200b and an operation interface 300a (not illustrated in Fig. 6) for a user to simtaneously adjust the brightness value and color temperature value. The user operation interface 400 includes two types of touch control sections: a long-strip touch control section and an arc-shaped touch control section, such that a user can be visually aware when he or she is simtaneously adjusting the brightness value and color temperature value. The detailed features of long-strip touch control section and arc-shaped touch control section have been described above.

According to the above-discussed embodiments, the user operation interface of the light adjustment device disclosed herein can be applied in various types of portable electronic devices for users to apply a touch action upon the graphical interface to select a desired brightness value or color temperature value visually and directly. In addition, the initial end and the terminal end of the arc-shaped touch control section or of the long-strip touch control section are spaced from each other, thereby preventing the selection mistakes of a conventional circular touch control section. When a user contacts a boundary between the initial end and the terminal end of the conventional circular touch control section, a selection of 100% brightness may be incrorrectly detected as 0% brightness, such that the user may suffer from uncomfortableness or inconvenience of the wrong detections.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A light adjustment device comprising:
a user operation interface adapted to be used by a user to select a brightness value or a color temperature value, wherein the user operation interface comprises:
a display unit for outputting a graphical interface; and
a touch control unit for detecting a touch action upon the graphical interface of the display unit;
a control unit being electrically connected to the user operation interface for receiving and processing a selection of the brightness value or the color temperature value from the user operation interface; and
a communication unit being electrically connected to the control unit for transmitting the selection of the brightness value or the color temperature value to a target lamp.

2. The light adjustment device of claim 1, wherein the graphical interface includes an arc-shaped touch control section and a touch control inhibiting section, and the arc-shaped touch control section and the touch control inhibiting section collectively form a close-loop ring, and the arc-shaped touch control section is capable of displaying a plurality of color gradients of the brightness value or the color temperature value.

3. The light adjustment device of claim 2, wherein the graphical interface further comprises a selection value display section disposed within the close-loop ring.

4. The light adjustment device of claim 2, wherein the arc-shaped touch control section further comprises a plurality of scales disposed on an edge thereof.

5. The light adjustment device of claim 2, wherein the control unit is capable of displaying a pointer corresponding to where the user is in contact with the arc-shaped touch control section.

6. The light adjustment device of claim 2, wherein the arc-shaped touch control section comprises an initial end and a terminal end, and the touch control inhibiting section is disposed between the initial end and the terminal end.

7. The light adjustment device of claim 1, wherein the graphical interface comprises a long-strip touch control section, and the long-strip touch control section display is capable of displaying a plurality of color gradients of the brightness value or the color temperature value.

8. The light adjustment device of claim 7, wherein the graphical interface further comprises a selection value display section disposed adjacent to the long-strip touch control section.

9. The light adjustment device of claim 7, wherein the long-strip touch control section comprises a plurality of scales disposed on an edge thereof.

10. The light adjustment device of claim 7, wherein the control unit is capable of displaying a pointer corresponding to where the user is in contact with the long-strip touch control section.

11. A light system comprising:
a lamp; and
a light adjustment device as claimed in either one of claims 1-10 for controlling the lamp via a wireless protocol.

12. The light system of claim 11, wherein the lamp is an LED (Light-Emitting Diode) lamp.

13. The light system of claim 11, wherein the wireless protocol comprises an infared, micromave, RF, Zigbee, Wimax, 2G, 3G, 4G, bluetooth or WIFI protocol.
